# EUROPEAN PATENT SPECIFICATION

(11) **EP 4 089 142 B1**
(45) Date of publication and mention of the grant of the patent: **02.12.2026**
(21) Application number: 20911852.0
(22) Date of filing: 25.12.2020
(51) Int. Cl.: C08K 5/098, C08K 3/36, C08L 9/02

(54) **RUBBER COMPOSITION AND MARINE HOSE**
KAUTSCHUKZUSAMMENSETZUNG UND SCHIFFSSCHLAUCH
COMPOSITION DE CAOUTCHOUC ET TUYAU MARIN

(30) Priority: 09.01.2020 JP 2020002203
(43) Date of publication of application: 16.11.2022
(73) Proprietor: The Yokohama Rubber Co., Ltd., Hiratsuka-shi, Kanagawa 254-8601 (JP)
(72) Inventor: TOGO Mari, Hiratsuka-shi, Kanagawa 254-8601 (JP)
(74) Representative: Grünecker Patent- und Rechtsanwälte PartG mbB
(86) International application number: PCT/JP2020/048625
(87) International publication number: WO 2021/140946

(56) References cited:
- EP-A1- 3 553 120
- WO-A1-2008/001692
- WO-A1-98/44035
- CN-A- 103 102 520
- CN-A- 103 694 511
- CN-A- 106 893 248
- JP-A- H01 190 739
- JP-A- H09 241 436
- DATABASE WPI Week 201779, Derwent World Patents Index; AN 2017-67196C, XP002810763
- DATABASE WPI Week 201562, Derwent World Patents Index; AN 2015-46753T, XP002810764

## Description

### Technical Field

The present invention relates to a rubber composition and a marine hose.

### Background Art

A marine hose is a hose used for, for example, transporting liquid fuel such as crude oil from a crude oil supplying facility in the sea to an offshore tanker, from an offshore tanker to a land-based plant, or from a tanker to a tanker.

Since a marine hose transports liquid fuel, examples of the performance required for a marine hose include oil resistance of an innermost layer (tube rubber) of the marine hose.

For example, Patent Document 1 describes a rubber composition containing an acrylonitrile-butadiene rubber, carbon black, silica, resorcin, and hexamethylene tetramine as a rubber composition constituting an innermost layer of a marine hose (Claim 1, Claim 11). Patent Document 2 discloses a modified oil-resistant rubber corrugated pipe for a waste engine oil refiner. The corrugated pipe is made of a modified oil-resistant rubber material. The modified oil-resistant rubber material is prepared from nitrile butadiene rubber, cadmium oxide, boric acid, silicon micro powder, fluoro rubber, modifier, cross linking agent, and plasticizer. The modifier is prepared from cerium oxide, zinc stearate, methyl silicon oil, and potassium dihydrogen phosphate. Patent Document 3 discloses a rubber tube characterized in that the rubber tube is prepared from the following raw materials in parts by weight: 80-120 parts of nitrile-butadiene rubber, 70-90 parts of carbon black, 1.5-2.5 parts of zinc stearate, 5-7 parts of anti-aging agent, 20-30 parts of plasticizer, 0.3-0.5 part of sulfur S-80, 3-10 parts of high aromatic oil, 4-6 parts of indirect-process zinc oxide, 0.2-0.4 part of anti-scorching agent, 10-15 parts of silicon dioxide, and dehydrated liquid composition with quaternary ammonium salt structure and carboxyl ion compound. Patent Document 4 a rubber composition including an acrylonitrile-butadiene rubber, carbon black, silica, resorcin, and hexamethylene tetramine. Patent Document 5 discloses a modified nitrile rubber gasket material, which is characterized by being prepared from the following raw materials in parts by weight: 95-100 parts of nitrile rubber, 8-10 parts of zinc oxide, 3-5 parts of stearic acid, 1-3 parts of anti-aging agent 4010, 6-8 parts of liquefied paraffin, 3-4 parts of 3-aminopropyltrimethoxysilane, 3-5 parts of triethyl acetyl citrate, 3-5 parts of magnesium oxide, 1-2 parts of calcium stearate, 20-25 parts of carbon black, 2-4.7 parts of accelerant, 20-24 parts of carbon black, 10-12 parts of nano silicon dioxide, 2-3 parts of zinc oxide and 10-12 parts of modified attapulgite. Patent Document 6 discloses a shoe sole material which is composed of the following raw materials in parts by weight: 30-40 parts of acrylonitrile-butadiene-styrene copolymer, 15-25 parts of nitrile-butadiene rubber, 20-25 parts of silicon dioxide, 5-8 parts of calcium carbonate, 2-3 parts of zinc stearate, 1-3 parts of barium stearate, 1-2 parts of hindered amine light stabilizer and 0.5-1.0 part of 1,3,5-tri(3,5-di-tert-butyl-4-hydroxybenzyl)isocyanurate. Patent Document 7 discloses a rubber composition and a modifier for preparing the same. A modifier which comprises a carboxylated and highly saturated copolymer rubber containing nitrile groups is prepared by masticating a highly saturated polymer rubber containing nitrile groups with a pressure kneader, introducing 1.8 parts by weight of maleic anhydride and 0.5 parts by weight of 2,6-di-tert-butyl-4-methylphenol (BHT) into the pressure kneader after the rubber temperature has reached 130 °C, continuously kneading the resultant mixture (prekneading) so as to regulate the rubber temperature to 250 °C by utilizing the heat of shearing generated by kneading, and further kneading the mixture at that temperature for 15 minutes to cause the rubber to undergo an ene-addition reaction. Patent Document 8 discloses a rubber composition being formed by mixing 5-70 pts.wt. nitrile rubber and/or chloroprene rubber (I), 95-30 pts.wt. fluororubber (II) and a crosslinking agent for (I) and reacting these components together under an applied shearing deformation.

### Citation List

### Patent Literature

Patent Document 1: JP 2019-183011 A
Patent Document 2: CN 107189129 A
Patent Document 3: CN 104672542 A
Patent Document 4: EP 3553120 A1
Patent Document 5: CN 103694511 A
Patent Document 6: CN 106893248 A
Patent Document 7: WO 98/44035 A1
Patent Document 8: JP H01 190739 A
Patent Document 9: WO 2008/001692 A

### Summary of Invention

### Technical Problem

Meanwhile, elongation of product lifetime of marine hoses has been demanded by the market.

In such circumstances, the inventor of the present invention found that the length of the product lifetime of a marine hose correlates with elongation at break of the rubber.

When the inventor of the present invention evaluated the rubber composition described in Patent Document 1, it was found that there is room for improvement to provide oil resistance and elongation at break in a compatible manner to a high degree. Specifically, the present inventor understood that the oil resistance decreases in a case where an amount of carbon black and the like contained in a rubber composition is reduced to achieve a high elongation at break, and it was found that oil resistance and elongation at break, in other words product lifetime, are in an antinomic relationship and are difficult to be provided in a compatible manner.

An object of the present invention is to provide a rubber composition that can provide oil resistance and product lifetime of a produced marine hose in a compatible manner to a high degree, and a marine hose produced by using the same.

### Solution to Problem

As a result of diligent research to solve the problems described above, the present inventor found that using a rubber composition containing an acrylonitrile butadiene copolymer, silica, and a specific amount of fatty acid metal salt can provide oil resistance and product lifetime of a produced marine hose in a compatible manner to a high degree, and thus completed the present invention.

That is, the present inventor found that the object described above can be achieved by the following features.
[1] A rubber composition containing an acrylonitrile butadiene copolymer, silica, and a fatty acid metal salt,
   a content of the fatty acid metal salt being 5 mass% or more and less than 50 mass% with respect to a mass of the silica,
   wherein a melting point of the fatty acid metal salt is from 85 to 105 °C, the melting point being measured by differential scanning calorimetry in accordance with ASTM D3418 at a temperature elevation speed of 10 °C/min.
[2] The rubber composition according to [1], where the fatty acid metal salt is a metal salt of a fatty acid having 6 or more carbons.
[3] The rubber composition according to [1] or [2], where the fatty acid metal salt is a fatty acid zinc salt.
[4] The rubber composition according to any one of [1] to [3], where a content of the silica is from 10 to 60 parts by mass, per 100 parts by mass of the acrylonitrile butadiene copolymer.
[5] Use of the rubber composition according to any one of [1] to [4] to form a marine hose.
[6] A marine hose formed by using the rubber composition according to any one of [1] to [5].
[7] The marine hose according to [6] having an innermost layer formed by using the rubber composition.

### Advantageous Effects of Invention

As described below, according to the present invention, a rubber composition that can provide oil resistance and product lifetime of a produced marine hose in a compatible manner to a high degree, and a marine hose produced by using the same can be provided.

### Description of Embodiments

Embodiments of the present invention will be described in detail below.

Although the components described below may be described based on representative embodiments of the present invention, the present invention is not limited to such embodiments.

Note that in the present specification, numerical ranges indicated using "(from) ... to ..." include the former number as the lower limit value and the latter number as the upper limit value.

Furthermore, in the present specification, unless otherwise noted, a substance corresponding to each component can be used alone or in combination of two or more types thereof. In a case where a component includes two or more types of substances, content of component means the total content of the two or more types of substances.

Furthermore, in the present specification, the production method of each component is not particularly limited unless otherwise noted. Examples of the method include a known method.

### Rubber composition

The rubber composition according to an embodiment of the present invention is a rubber composition containing an acrylonitrile butadiene copolymer (hereinafter, also abbreviated as "NBR"), silica, and a fatty acid metal salt.

Furthermore, in the rubber composition according to an embodiment of the present invention, a content of the fatty acid metal salt being 5 mass% or more and less than 50 mass% with respect to a mass of the silica.

In an embodiment of the present invention, as described above, using a rubber composition containing an NBR, silica, and a specific amount of fatty acid metal salt can provide oil resistance and product lifetime of a produced marine hose in a compatible manner to a high degree.

The details are not entirely clear, however, the following reasons are conceivable.

That is, it is conceived that, due to the content of the fatty acid metal salt being 5 mass% or more and less than 50 mass% with respect to the mass of the silica, formation of a bound rubber of the NBR and the silica is facilitated, and thus the oil resistance is improved.

Furthermore, it is conceived that, because a moiety of fatty acid of fatty acid metal salt functions as a plasticizer in the rubber composition, elongation at break is improved and a longer product lifetime is achieved.

Each of the components contained in the rubber composition according to an embodiment of the present invention will be described in detail below.

### Acrylonitrile butadiene copolymer

The NBR contained in the rubber composition according to an embodiment of the present invention is a copolymer of acrylonitrile and butadiene or a hydrogenated product thereof.

### Acrylonitrile amount

From the perspective of achieving excellent oil resistance of a produced marine hose, the acrylonitrile amount of the NBR is preferably 30 mass% or more, more preferably 35 mass% or more, even more preferably 40 mass% or more, and particularly preferably 43 mass% or more, with respect to the total amount of the NBR.

Furthermore, the acrylonitrile amount of the NBR is preferably 50 mass% or less with respect to the total amount of the NBR, and from the perspective of excellent processability, the acrylonitrile amount is more preferably 48 mass% or less.

In an embodiment of the present invention, the acrylonitrile amount (bound acrylonitrile content) of the NBR can be measured by the Kjeldahl method in accordance with JIS K 6451-2:2016.

### Mooney viscosity

The Mooney viscosity of the NBR is preferably from 45 to 85, and more preferably from 45 to 60, from the perspectives of achieving excellent adhesiveness and providing oil resistance and product lifetime of a produced marine hose in a compatible manner to a higher degree.

In an embodiment of the present invention, the Mooney viscosity of the acrylonitrile-butadiene rubber can be measured under conditions of 100°C in accordance with JIS K 6300-1: 2013.

The content of the NBR is preferably from 80 to 100 mass%, and more preferably 100 mass%, with respect to the mass of the entire rubber component including the NBR from the perspective of providing oil resistance and product lifetime of a produced marine hose in a compatible manner to a higher degree.

### Other rubber

The rubber composition according to an embodiment of the present invention can contain a rubber component besides the NBR.

Examples of the rubber component include diene rubbers such as natural rubber (NR), isoprene rubber (IR), butadiene rubber (BR), 1,2-butadiene rubber, styrene-butadiene rubber (SBR), chloroprene rubber (CR), butyl rubber (IIR), and ethylene-propylene-diene rubber (EPDM).

### Silica

The silica contained in the rubber composition according to an embodiment of the present invention is not particularly limited, and a known silica can be used.

The silica is preferably acidic silica from the perspective of providing oil resistance and product lifetime of a produced marine hose in a compatible manner to a higher degree. Note that the pH of the acidic silica is not particularly limited as long as the pH is lower than 7.

In an embodiment of the present invention, the pH of silica can be measured in accordance with JIS K5101-17-2: 2004.

The content of the silica is preferably from 10 to 60 parts by mass, and more preferably from 15 to 50 parts by mass, per 100 parts by mass of the NBR from the perspective of providing oil resistance and product lifetime of a produced marine hose in a compatible manner to a higher degree.

### Fatty acid metal salt

The fatty acid metal salt contained in the rubber composition according to an embodiment of the present invention is a salt of a fatty acid and a metal.

Specific examples of the fatty acid of the fatty acid metal salt include saturated fatty acids, such as acetic acid, propionic acid, butanoic acid, pentanoic acid, isopentanoic acid, caproic acid (hexanoic acid), heptanoic acid, caprylic acid (octanoic acid), nonanoic acid, capric acid (decanoic acid), lauric acid (dodecanoic acid), myristic acid (tetradecanoic acid), palmitic acid (hexadecanoic acid), stearic acid (octadecanoic acid), arachidic acid (eicosanoic acid), behenic acid (docosanoic acid), tetracosanoic acid, and hexacosanoic acid; unsaturated fatty acids, such as oleic acid, linoleic acid, linolenic acid, elaidic acid, and erucic acid; and hydroxyfatty acids, such as ricinoleic acid and hydroxystearic acid. One type of the fatty acid may be used alone, or two or more types of the fatty acids may be used in a combination.

Among these fatty acids, from the perspective of achieving excellent oil resistance of a produced marine hose, a fatty acid having 6 or more carbons is preferred.

Examples of the metal of the fatty acid metal salt include alkali metals (e.g., lithium, potassium, and sodium), alkaline earth metals (e.g., beryllium, magnesium, calcium, strontium, and barium), transition metals (metals of Groups 3 to 11), zinc, aluminum, germanium, tin, and antimony.

Among these metals, because of ease in forming a complex with the fatty acid, zinc is preferred.

Specific examples of the preferred fatty acid metal salt include zinc oleate, zinc palmitate, zinc myristate, and zinc linoleate, and one type of these may be used alone, or two or more types of these may be used in combination.

The fatty acid metal salt has a melting point of from 85 to 105°C from the perspective of achieving excellent processability.

In an embodiment of the present invention, the melting point of the fatty acid metal salt can be measured by differential scanning calorimetry (DSC) in accordance with ASTM D3418 at a temperature elevation speed of 10°C/min.

The content of the fatty acid metal salt is 5 mass% or more and less than 50 mass%, and preferably from 5 to 45 mass%, with respect to the mass of the silica described above.

### Carbon black

The rubber composition according to an embodiment of the present invention may further contain carbon black.

The carbon black is not particularly limited, and a known carbon black can be used.

Among these, from the perspective of achieving superior oil resistance of a produced marine hose, the carbon black is preferably soft carbon such as carbon blacks of Fine Thermal (FT) grade, General Purpose Furnace (GPF) grade, and Semi-Reinforcing Furnace (SRF) grade, more preferably carbon black of FT grade or SRF grade, and even more preferably carbon black of FT grade.

### Nitrogen adsorption specific surface area of carbon black

The nitrogen adsorption specific surface area (N₂SA) of the carbon black is preferably 20 m²/g or more and 40 m²/g or less, and more preferably 20 m²/g or more and 30 m²/g or less, from the perspective of achieving superior oil resistance of a produced marine hose.

In an embodiment of the present invention, the nitrogen adsorption specific surface area of the carbon black can be measured in accordance with JIS K 6217-2:2001 "Part 2: Determination of specific surface area - Nitrogen adsorption methods - Single-point procedures".

### Dibutyl phthalate oil absorption of carbon black

The dibutyl phthalate oil absorption (DBP oil absorption) of the carbon black is preferably from 20 mL/100 g or more and 80 mL/100 g or less, and more preferably 20 mL/100 g or more and 50 mL/100 g or less, from the perspective of achieving superior oil resistance of a produced marine hose.

In an embodiment of the present invention, the dibutyl phthalate oil absorption (DBP absorption) of the carbon black can be measured in accordance with JIS K 6217-4: 2008 "Carbon black for rubber industry - Fundamental characteristics - Part 4: Determination of oil absorption number (OAN) and oil absorption number of compressed sample (COAN)".

In a case where the rubber composition according to an embodiment of the present invention contains carbon black, the content of the carbon black is preferably 70 parts by mass or more and 100 parts by mass or less, more preferably 75 parts by mass or more and 95 parts by mass or less, and even more preferably 80 parts by mass or more and less than 90 parts by mass, per 100 parts by mass of the NBR from the perspectives of achieving excellent adhesiveness and achieving superior oil resistance of a produced marine hose.

### Sulfur

The rubber composition according to an embodiment of the present invention preferably contains sulfur from the perspectives of achieving excellent adhesiveness and providing oil resistance and product lifetime of a produced marine hose in a compatible manner to a higher degree.

The sulfur is not particularly limited. For example, known ones can be used.

In a case where the rubber composition according to an embodiment of the present invention contains sulfur, the content of the sulfur is preferably from 1 to 3 parts by mass, and more preferably from 1 to 2 parts by mass, per 100 parts by mass of the NBR from the perspectives of achieving excellent adhesiveness and providing oil resistance and product lifetime of a produced marine hose in a compatible manner to a higher degree.

### Additives

The rubber composition according to an embodiment of the present invention can further contain additives such as plasticizers, anti-aging agents, antioxidants, antistatic agents, flame retardants, vulcanizing agents other than sulfur, vulcanization accelerators, adhesion aids, vulcanization retarders, and fillers other than silica and carbon black, unless such an additive impairs the object of the present invention.

There are no particular restrictions to the method of producing the rubber composition according to an embodiment of the present invention, and an example is the method whereby each of the above-mentioned components is mixed using a known method and device (such as a Banbury mixer, kneader, or roll).

The mixing temperature during production of the rubber composition according to an embodiment of the present invention is, for example, preferably from 50 to 120°C.

Furthermore, the rubber composition of the present invention can be vulcanized under known vulcanizing conditions.

The rubber composition of the present invention can be suitably used to form a marine hose.

As a method of producing the marine hose formed from the rubber composition according to an embodiment of the present invention, for example, first, a sheet of the composition according to an embodiment of the present invention is wound around a mandrel. A method of winding the sheet of the rubber composition according to an embodiment of the present invention around the mandrel is not particularly limited, and examples thereof include a method of winding the sheet (e.g., spirally) while the sheets are partially overlapped. Next, on the sheet of the rubber composition according to an embodiment of the present invention, for example, at least one selected from the group consisting of a resin layer, a reinforcing layer, an intermediate rubber layer, a buoyant material layer, and an outermost layer (e.g., cover rubber layer) can be layered. Each layer described above is not particularly limited. For example, known ones can be used. Furthermore, for each layer described above, for example, materials or arrangement in the marine hose are not particularly limited.

The marine hose in which the innermost layer is formed from the rubber composition according to an embodiment of the present invention can be produced by, for example, vulcanizing the multilayer structure obtained as described above.

Since the marine hose is generally large, an example of a preferable aspect is one in which for example when the multilayer structure is vulcanized, at an initial stage, the multilayer structure is heated for from 1 to 1.5 hours at a temperature in a range of, for example, from 100 to 110°C, and thereafter, the multilayer structure is heated under conditions of from 130 to 147°C to complete vulcanization and the like.

### Marine hose

The marine hose according to an embodiment of the present invention is a marine hose formed by using the rubber composition according to an embodiment of the present invention.

The rubber composition used in the marine hose according to an embodiment of the present invention is not particularly limited as long as it is the rubber composition of an embodiment of the present invention.

The marine hose according to an embodiment of the present invention is not particularly limited as long as the marine hose is formed by using the rubber composition described above.

### Innermost layer

An example of a preferable aspect is one in which the marine hose according to an embodiment of the present invention has an innermost layer formed by using the rubber composition described above.

In the case where the innermost layer is formed by using the rubber composition according to an embodiment of the present invention, the thickness of the innermost layer can be, for example, from 1.5 to 8.0 mm.

The marine hose according to an embodiment of the present invention can further have at least one selected from the group consisting of a reinforcing layer, an intermediate rubber layer, an outermost layer, a resin layer, and a buoyant material layer in addition to the innermost layer.

The marine hose according to an embodiment of the present invention may have the reinforcing layer in a form of a single layer or multiple layers. The same applies to the intermediate rubber layer.

The marine hose according to an embodiment of the present invention can have, for example, the innermost layer, the reinforcing layer, and the outermost layer in the order described above.

The marine hose according to an embodiment of the present invention can further have an intermediate rubber layer in between the innermost layer and the reinforcing layer or in between the reinforcing layer and the outermost layer.

**In** the case where the marine hose according to an embodiment of the present invention has multiple reinforcing layers, the marine hose can further have an intermediate rubber layer in between a reinforcing layer and a reinforcing layer.

**In** the case where the marine hose according to an embodiment of the present invention has multiple reinforcing layers and can have an intermediate rubber layer in between a reinforcing layer and a reinforcing layer, an example of the form of the marine hose is innermost layer/[intermediate rubber layer/reinforcing layer]ₙ/intermediate rubber layer/outermost layer. **In** the form described above, the marine hose can have n layers of [intermediate rubber layer/reinforcing layer]. For example, n can be from 2 to 10. [Intermediate rubber layer/reinforcing layer] means, for example, a multilayer structure of an intermediate rubber layer and a reinforcing layer or a structure in which the intermediate rubber layer is provided in advance on a reinforcing layer as a coating rubber.

### Reinforcing layer

The reinforcing layer that can be further included in the marine hose according to an embodiment of the present invention is not particularly limited.

Examples of the material of the reinforcing layer include metals and fiber materials (e.g., polyamide and polyester).

The reinforcing layer may be a surface-treated reinforcing layer. Furthermore, the reinforcing layer may be, for example, a reinforcing layer in which an intermediate rubber layer is provided in advance on a reinforcing layer as a coating rubber.

Examples of the form of the reinforcing layer include those braided into a spiral structure and/or a braid structure, woven fabric (e.g., canvas), and nonwoven fabric.

The thickness of the reinforcing layer (e.g., a single layered reinforcing layer) (or the thickness of a reinforcing layer in which a coating rubber is provided in advance) can be, for example, from 0.5 to 1.5 mm.

### Intermediate rubber layer

The intermediate rubber layer that can be further included in the marine hose according to an embodiment of the present invention is not particularly limited.

Examples of rubber contained in the intermediate rubber layer include natural rubber and/or synthetic rubber.

The thickness of the intermediate rubber layer can be, for example, from 2.0 to 8.0 mm.

**In** the case where the intermediate rubber layer is formed with a reinforcing layer to which a coating rubber is provided in advance on one side or both side, the thickness of the intermediate rubber layer on the reinforcing layer (excluding coating rubber layer) can be, for example, 0.5 mm or more.

### Outermost layer

The outermost layer that can be further included in the marine hose according to an embodiment of the present invention is not particularly limited.

The outermost layer can be, for example, a rubber layer.

Examples of the rubber contained in the outermost layer include natural rubber and/or synthetic rubber.

The thickness of the outermost layer can be, for example, from 2.0 to 10.0 mm.

An inner diameter of the marine hose according to an embodiment of the present invention is not particularly limited. For example, the inner diameter can be from 10 to 30 inches.

A length of the marine hose according to an embodiment of the present invention is not particularly limited. For example, the length can be from 5 to 20 meters.

### Examples

Embodiments of the present invention are described in further detail below using examples. Materials, used amounts, proportions, treatment details, treatment procedure, and the like described in the following examples can be appropriately modified without departing from the gist of an embodiment of the present invention. Thus, the scope of the present invention is not limited to the following examples.

### Comparative Examples 1 to 4 and Examples 1 to 10

### Preparation of rubber composition

The components listed in Table 1 below were blended in compositions (part by mass) listed in the same table, and thus a rubber composition was prepared.

Specifically, first, of the components listed in Table 1 below, components other than sulfur and a vulcanization accelerator were mixed in a 1.5 liter sealed mixer for 5 minutes under conditions of 100°C, and thus a master batch was obtained. Next, the sulfur and the vulcanization accelerator were added to the obtained master batch in the amounts listed in Table 1 below, and these were mixed with an open roll under conditions of 50°C, and thus a rubber composition was prepared.

### Evaluation

The following evaluations were performed by using each of the prepared rubber compositions. The results are shown in Table 1.

### Preparation of initial test piece

Using a 148°C press molding machine, each of the prepared rubber compositions was vulcanized for 195 minutes under a surface pressure of 3.0 MPa, and thus a vulcanized sheet having a thickness of 2 mm was produced.

In accordance with JIS K 6251:2017, a JIS standard No. 3 dumbbell was punched from the vulcanized sheet, and thus an initial test piece was produced.

### Oil resistance

The initial test piece was immersed in a fuel oil for testing C [volume fractions of 2,2,4-trimethylpentane (isooctane) to toluene was 50:50] specified in appendix A of JIS K 6258:2016 at room temperature for 48 hours.

The volume of each of the test pieces was measured before and after the immersion, and a rate of change of the volume was calculated based on the following equation.

Note that a case where the rate of change of the volume was less than 27% was evaluated as achieving excellent oil resistance, and a case where the rate of change of the volume was closer to 0% was evaluated as achieving superior oil resistance. 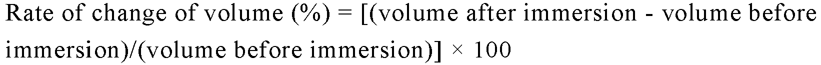 Rate of change of volume (%) = [(volume after immersion - volume before immersion)/(volume before immersion)] × 100

### Elongation at break (product lifetime)

Using an initial test piece, a tensile test was performed in accordance with JIS K 6251:2017 under conditions of room temperature at a tensile speed of 500 mm/min, and the elongation at break (EB) [%] was measured.

Note that, when EB was 495% or higher, the product lifetime of the marine hose was evaluated as being long.

**[Table 1-1]**

| Table 1 | Comparative Example | | | |
|---|---|---|---|---|
| | 1 | 2 | 3 | 4 |
| NBR | 100 | 100 | 100 | 100 |
| Carbon black | 87 | 87 | 87 | 87 |
| Silica | 27 | 27 | 7 | 87 |
| Fatty acid metal salt 1 | | 14 | 4 | 4 |
| Fatty acid metal salt 2 | | | | |
| Fatty acid metal salt/silica | - | 51.9% | 57.1% | 4.6% |
| Zinc oxide | 5 | 5 | 5 | 5 |
| Stearic acid | 2 | 2 | 2 | 2 |
| Plasticizer | 15 | 15 | 15 | 15 |
| Sulfur | 1.5 | 1.5 | 1.5 | 1.5 |
| Vulcanization accelerator | 1 | 1 | 1 | 1 |
| Oil resistance (%) | 27.2 | 27.0 | 29.1 | 16.8 |
| Elongation at break (%) | 469 | 630 | 527 | 474 |

**[Table 1-2]**

| Table 1 | Example | | | | | | | | | |
|---|---|---|---|---|---|---|---|---|---|---|
| | 1 | 2 | 3 | 4 | 5 | 6 | 7 | 8 | 9 | 10 |
| NBR | 100 | 100 | 100 | 100 | 100 | 100 | 100 | 100 | 100 | 100 |
| Carbon black | 87 | 87 | 87 | 87 | 87 | 87 | 87 | 87 | 87 | 87 |
| Silica | 27 | 27 | 27 | 27 | 27 | 27 | 27 | 27 | 17 | 37 |
| Fatty acid metal salt 1 | 2 | 4 | 6 | 8 | 12 | | | | 4 | 4 |
| Fatty acid metal salt 2 | | | | | | 2 | 4 | 6 | | |
| Fatty acid metal salt/silica | 7.4% | 14.8% | 22.2% | 30.0% | 44.4% | 7.4% | 14.8% | 22.2% | 23.5% | 10.8% |
| Zinc oxide | 5 | 5 | 5 | 5 | 5 | 5 | 5 | 5 | 5 | 5 |
| Stearic acid | 2 | 2 | 2 | 2 | 2 | 2 | 2 | 2 | 2 | 2 |
| Plasticizer | 15 | 15 | 15 | 15 | 15 | 15 | 15 | 15 | 15 | 15 |
| Sulfur | 1.5 | 1.5 | 1.5 | 1.5 | 1.5 | 1.5 | 1.5 | 1.5 | 1.5 | 1.5 |
| Vulcanization accelerator | 1 | 1 | 1 | 1 | 1 | 1 | 1 | 1 | 1 | 1 |
| Oil resistance (%) | 23.4 | 23.3 | 24.2 | 25.0 | 26.8 | 23.9 | 22.3 | 23.0 | 25.0 | 23.3 |
| Elongation at break (%) | 517 | 542 | 564 | 586 | 608 | 529 | 551 | 544 | 511 | 495 |

The details of each component shown in Table 1 above are as follows.
- NBR: Nipol DN005M (acrylonitrile amount: 45 mass%; Mooney viscosity: 50; available from Zeon Corporation)
- Carbon black: FT carbon black (Asahi Thermal, available from Asahi Carbon Co., Ltd.; nitrogen adsorption specific surface area: 24 m²/g; dibutyl phthalate oil absorption: 28 mL/100 g)
- Silica: Nipsil AQ (available from Tosoh Silica Corporation)
- Fatty acid metal salt 1: Fatty acid zinc salt compound (trade name: STRUKTOL EF44, available from Schill & Seilacher GmbH & Co.; melting point: 95°C)
- Fatty acid metal salt 2: Fatty acid zinc salt compound (trade name: Aktiplast ST, available from Rhein Chemie; melting point: 85 to 100°C)
- Zinc oxide: Zinc Oxide III (available from Seido Chemical Industry Co., Ltd.)
- Stearic acid: Stearic acid YR (available from NOF Corporation)
- Plasticizer: diisononyl phthalate (produced by Jay Plus, Inc.)
- Sulfur: Oil-treated sulfur (available from Hosoi Chemical Industry Co., Ltd.)
- Vulcanization accelerator: Nocceler CZ-G (available from Ouchi Shinko Chemical Industrial Co., Ltd.)

From the results shown in Table 1 above, it was found that a case where no fatty acid metal salt was blended exhibited poor oil resistance (Comparative Example 1).

Furthermore, it was found that a case where the content of the fatty acid metal salt was 50 mass% or more with respect to the mass of the silica exhibited poor oil resistance (Comparative Examples 2 and 3).

Furthermore, it was found that a case where the content of the fatty acid metal salt was less than 5 mass% with respect to the mass of the silica exhibited a low elongation at break and poor product lifetime (Comparative Example 4).

Meanwhile, from the results shown in Table 1 above, it was found that, when the acrylonitrile butadiene copolymer, the silica, and the fatty acid metal salt were contained and the content of the fatty acid metal salt was 5 mass% or more and less than 50 mass% with respect to a mass of the silica, the oil resistance and the product lifetime of the produced marine hose were provided in a compatible manner to a high degree (Examples 1 to 10).

## Claims

1. A rubber composition comprising:
an acrylonitrile butadiene copolymer;
silica; and
a fatty acid metal salt,
a content of the fatty acid metal salt being 5 mass% or more and less than 50 mass% with respect to a mass of the silica,
wherein a melting point of the fatty acid metal salt is from 85 to 105 °C, the melting point being measured by differential scanning calorimetry in accordance with ASTM D3418 at a temperature elevation speed of 10 °C/min.

2. The rubber composition according to claim 1, wherein the fatty acid metal salt is a metal salt of a fatty acid having 6 or more carbons.

3. The rubber composition according to claim 1 or 2, wherein the fatty acid metal salt is a fatty acid zinc salt.

4. The rubber composition according to any one of claims 1 to 3, wherein a content of the silica is from 10 to 60 parts by mass, per 100 parts by mass of the acrylonitrile butadiene copolymer.

5. Use of the rubber composition according to any one of claims 1 to 4 to form a marine hose.

6. A marine hose formed by using the rubber composition according to any one of claims 1 to 5.

7. The marine hose according to claim 6, comprising an innermost layer formed by using the rubber composition.

## Patentansprüche

1. Kautschukzusammensetzung, umfassend:
ein Acrylnitril-Butadien-Copolymer;
Kieselsäure; und
ein Metallsalz einer Fettsäure,
wobei ein Gehalt des Metallsalzes einer Fettsäure 5 Massen-% oder mehr und weniger als 50 Massen-% bezogen auf eine Masse der Kieselsäure beträgt,
wobei ein Schmelzpunkt des Metallsalzes einer Fettsäure 85 bis 105 °C beträgt, wobei der Schmelzpunkt durch dynamische Differenzkalorimetrie gemäß ASTM D3418 bei einer Temperaturanstiegsgeschwindigkeit von 10 °C/min gemessen wird.

2. Kautschukzusammensetzung nach Anspruch 1, wobei das Metallsalz einer Fettsäure ein Metallsalz einer Fettsäure ist, die 6 oder mehr Kohlenstoffatome aufweist.

3. Kautschukzusammensetzung nach Anspruch 1 oder 2, wobei das Metallsalz einer Fettsäure ein Zinksalz einer Fettsäure ist.

4. Kautschukzusammensetzung nach einem der Ansprüche 1 bis 3, wobei ein Gehalt der Kieselsäure 10 bis 60 Massenteile je 100 Massenteile des Acrylnitril-Butadien-Copolymers beträgt.

5. Verwendung der Kautschukzusammensetzung nach einem der Ansprüche 1 bis 4 zur Herstellung eines Schiffsschlauchs.

6. Schiffsschlauch, der unter Verwendung der Kautschukzusammensetzung nach einem der Ansprüche 1 bis 5 hergestellt ist.

7. Schiffsschlauch nach Anspruch 6, umfassend eine innerste Schicht, die unter Verwendung der Kautschukzusammensetzung hergestellt ist.

## Revendications

1. Composition de caoutchouc comprenant :
un copolymère d'acrylonitrile et de butadiène ;
de la silice ; et
un sel métallique d'un acide gras,
une teneur en sel métallique d'un acide gras étant de 5 % en masse ou plus et de moins de 50 % en masse par rapport à une masse de la silice,
dans laquelle un point de fusion du sel métallique d'un acide gras est de 85 à 105 °C, le point de fusion étant mesuré par calorimétrie différentielle à balayage conformément à la norme ASTM D3418 à une vitesse de montée en température de 10 °C/min.

2. Composition de caoutchouc selon la revendication 1, dans laquelle le sel métallique d'un acide gras est un sel métallique d'un acide gras comportant 6 atomes de carbone ou plus.

3. Composition de caoutchouc selon la revendication 1 ou 2, dans laquelle le sel métallique d'un acide gras est un sel de zinc d'un acide gras.

4. Composition de caoutchouc selon l'une quelconque des revendications 1 à 3, dans laquelle une teneur en silice est de 10 à 60 parties en masse pour 100 parties en masse du copolymère d'acrylonitrile et de butadiène.

5. Utilisation de la composition de caoutchouc selon l'une quelconque des revendications 1 à 4 pour former un tuyau marin.

6. Tuyau marin formé en utilisant la composition de caoutchouc selon l'une quelconque des revendications 1 à 5.

7. Tuyau marin selon la revendication 6, comprenant une couche la plus interne formée en utilisant la composition de caoutchouc.
